# FASCICULE DE BREVET EUROPEEN

(11) **EP 3 902 650 B1**
(45) Date de publication et mention de la délivrance du brevet: **19.07.2023**
(21) Numéro de dépôt: 19828798.9
(22) Date de dépôt: 27.12.2019
(51) Int. Cl.: B29C 64/209, B29C 64/141, B29C 64/35, B29C 64/357, B33Y 30/00, B23K 26/342, B22F 10/73, B22F 12/55, B22F 12/53, B22F 10/25

(54) **TÊTE OPTIQUE D'IMPRESSION 3D PAR PROJECTION DE POUDRE**
OPTISCHER 3D-PULVER-SPRÜHDRUCKKOPF
POWDER-SPRAYING 3D OPTICAL PRINTING HEAD

(30) Priorité: 28.12.2018 FR 1874350
(43) Date de publication de la demande: 03.11.2021
(73) Titulaire: AddUp, 63118 Cébazat (FR)
(72) Inventeur: SEBAL, Jean-Luc, 75009 PARIS (FR); CADOUX, Guillaume, 75009 PARIS (FR)
(74) Mandataire: Barascou, Frédéric
(86) Numéro de dépôt international: PCT/EP2019/087112
(87) Numéro de publication internationale: WO 2020/136268

(56) Documents cités:
- EP-A1- 3 189 925
- WO-A1-2018/134605
- WO-A2-2005/107981
- CN-A- 106 584 849
- US-A1- 2006 266 740
- US-A1- 2012 145 683
- US-A1- 2017 050 268

## Description

### DOMAINE TECHNIQUE

L'invention concerne le domaine de la fabrication par impression 3D utilisée dans de nombreux domaines techniques tels que l'automobile ou l'aéronautique.

Plus particulièrement, l'invention concerne une tête d'une imprimante 3D par projection de poudres et une imprimante comprenant une telle tête.

### ETAT DE LA TECHNIQUE

La fabrication additive ou impression 3D désigne un ensemble de procédés permettant de fabriquer un objet par superposition de couches de matières, par exemples métalliques ou plastiques, à partir d'un modèle numérique.

Ce processus de fabrication permet de créer des formes plus complexes que les techniques d'usinage classiques par soustraction de matière.

La fabrication additive par projection de poudres est l'une des techniques de fabrication additive les plus prometteuses. Cette technique consiste à fondre une ou plusieurs poudre(s) à l'aide d'un faisceau à haute énergie, par exemple un faisceau laser, afin de générer un dépôt aux dimensions bien maîtrisées. Les couches de matière sont empilées successivement pour créer des pièces techniques fonctionnelles.

En outre, cette technologie permet une économie de matière par rapport à un usinage classique, dans lequel l'enlèvement de matière peut, par exemple, atteindre jusqu'à 80% de la pièce finie.

Une machine d'impression 3D par projection de poudre possède une tête d'impression reliée à au moins une source de poudre via un distributeur de poudres qui distribue la poudre vers un conduit d'amené de poudre. La poudre est acheminée dans un flux de gaz porteur, par exemple de l'argon, et est déplacée vers un point de fusion pour être fondue par un faisceau, par exemple laser.

Sur les imprimantes 3D connues de l'état de la technique, le distributeur est situé loin de la tête d'impression, généralement à l'extérieur de l'enceinte de la machine, pour des raisons d'encombrement et de maintenance.

Il en résulte une longueur importante du conduit d'amené ce qui induit un temps de réponse important entre le départ et l'arrivée de la poudre. Ce temps de réponse est préjudiciable puisqu'il empêche de pouvoir arrêter le débit de poudre entre deux déplacements de la tête d'impression sans tir laser. Ceci peut donc causer une perte importante de poudre pendant la fabrication d'une pièce.

L'objectif de l'invention est d'apporter une solution au problème indiqué précédemment, en proposant une tête de distribution de poudre permettant de limiter les pertes de poudre et une machine de fabrication 3D comprenant un tel moyen de distribution.

Le document US 2006/266740 A1 divulgue une tête de distribution de poudres pour machine de fabrication additive comportant une ouverture traversante agencée pour permettre un passage d'un faisceau à haute énergie vers le point de fusion, un corps comprenant N conduits d'amené de poudre vers un point de fusion, lesdits conduits étant régulièrement distribués autour de l'ouverture traversante et convergeant vers le point de fusion, la tête de distribution comprenant en outre un organe de distribution comprenant au moins une chambre de distribution de poudre présentant une entrée de poudre et N sorties de poudre régulièrement distribuées autour de l'ouverture traversante de manière que chaque sortie de poudre puisse se connecter à un conduit d'amené de poudre respectif.

Le document EP 3 189 925 A1 divulgue une tête de distribution de poudres pour machine de fabrication additive comportant un corps et un organe de distribution qui sont mobiles l'un par rapport à l'autre, pour connecter ou déconnecter fluidiquement les sorties de poudre aux conduits d'amené de poudre selon la position relative dudit organe de distribution par rapport au corps.

### DESCRIPTION DE L'INVENTION

A cet effet, l'invention a pour objet une tête de distribution de poudres, aussi appelée tête d'impression, pour machine de fabrication additive selon l'objet de la revendication 1.

Le faisceau à haute énergie est par exemple un faisceau laser.

Le mouvement relatif peut par exemple être par translation ou par rotation de l'un par rapport à l'autre.

Ainsi, contrairement aux imprimantes connues où l'organe de distribution est éloigné de la tête d'impression, selon l'invention un organe de distribution de poudre est compris dans la tête d'impression 3D. Ceci réduit donc considérablement la longueur du conduit d'amené de poudre qui chemine la poudre au point de fusion.

En outre, grâce à un mouvement relatif entre le corps de la tête et l'organe de distribution, l'alimentation en poudre peut être coupée rapidement lorsque le laser est coupé. Il en résulte une économie considérable de poudre.

Selon un mode de réalisation, l'organe de distribution peut comprendre :
- une première chambre de distribution de poudre présentant une première entrée de poudre et au moins une première sortie de poudre, et
- une deuxième chambre de distribution de poudre présentant une deuxième entrée de poudre et au moins une deuxième sortie de poudre.

Le corps et l'organe de distribution présentent au moins une position dans laquelle la première sortie de poudre ou la deuxième sortie de poudre est connectée fluidiquement au conduit d'amené de poudre.

Ainsi, il est possible de passer d'une première poudre à une deuxième de nature différente pour fabriquer des pièces multi-matériaux.

Avantageusement, l'organe de distribution comprend un moyen de mixage configuré pour envoyer au conduit d'amené de poudre un mélange composé d'une proportion de la première poudre sortant de la première chambre et d'une proportion de la deuxième poudre sortant de la deuxième chambre.

Ceci permet de fabriquer des objets composés d'un mélange de poudres. En outre, un dosage proportionnel de deux poudres PA et PB permet de fabriquer des pièces de caractéristiques évolutives en faisant changer les concentrations PA et PB lors de la fabrication.

Avantageusement, le corps comprend en outre un circuit de recyclage de poudre configuré pour évacuer la poudre à destination d'un container de recyclage, l'organe de distribution étant configuré pour connecter fluidiquement la première sortie de poudre ou la deuxième sortie de poudre au circuit de recyclage lorsque celle-ci est déconnectée du conduit d'amené.

Ceci permet de recycler les poudres et de garder un flux constant de gaz porteur empêchant des dépôts de résidus de poudres dans les conduits.

Selon un mode de réalisation, le corps comprend deux circuits de recyclage configurés chacun pour évacuer une poudre à destination d'un container de recyclage respectif, la première sortie et la deuxième sortie étant configurée chacune pour être connectée à son circuit de recyclage respectif lorsqu'elle est déconnectée du conduit d'amené de poudre.

Ainsi, deux poudres peuvent être recyclées.

Avantageusement, l'organe de distribution comprend en outre une chambre de distribution d'un gaz de purge, de préférence un gaz pur tel que de l'argon, présentant une entrée de gaz et au moins une sortie de gaz, le corps et l'organe de distribution présentant au moins une position dans laquelle la sortie de gaz est connectée fluidiquement au conduit d'amené de poudre, au premier circuit de recyclage ou au deuxième circuit de recyclage.

Le gaz de purge permet de purger les différents circuits, en particuliers les première et deuxième chambre, des résidus de poudres.

Selon un mode de réalisation, le corps peut comprendre un conduit externe d'amené de poudre agencé pour communiquer fluidiquement avec une sortie de poudre et configuré pour amener la première poudre ou la deuxième poudre vers le point de fusion.

Ceci permet d'injecter une poudre sans passer par le conduit d'amené principal interne à la tête d'impression. En effet, une tête de fabrication additive est exposée à la chaleur liée au faisceau laser et au rayonnement provenant de la pièce en cours de fabrication. Ainsi, lorsque la première poudre nécessite un fort apport calorifique alors que la deuxième poudre non, alors la première poudre est injectée via le conduit d'amené principal et la deuxième via le conduit externe. Ceci permet donc d'inclure la deuxième poudre dans le bain de fusion sans la chauffer inutilement.

Avantageusement, la tête de distribution de poudres comprend en outre un circuit de refroidissement configuré pour faire circuler un fluide de refroidissement, par exemple un liquide, entre une entrée et une sortie dudit fluide.

Le refroidissement par un liquide garantit un bon refroidissement de la tête. La chaleur peut diffuser vers le corps de la tête, la pointe de la tête étant très fine et fragile, son échauffement accélère les effets de collage de scories et en conséquence une détérioration du flux de focalisation de poudre.

Le réseau de circulation d'eau dans la tête constitue un bouclier thermique pour les éléments mécaniques internes et les joints d'étanchéité, en particulier le corps peut bénéficier d'une très importante surface d'échange avec le système de refroidissement.

Selon un mode de réalisation de l'invention, le corps présente une forme conique, l'ouverture traversante étant agencée entre la base et le sommet du cône.

Selon un autre mode de réalisation de l'invention, l'organe de distribution a la forme d'une couronne agencée pour coopérer avec la base du cône et est mobile en rotation par rapport à celle-ci.

Avantageusement, l'ouverture traversante passe par l'axe du cône. Dans ce cas, la rotation de la couronne par rapport à la base du cône peut être selon l'axe du cône.

Avantageusement, le corps comprend un nombre N de conduits d'amené de poudre régulièrement distribués autour de l'ouverture traversante et convergeant vers le point de fusion. N peut être supérieur ou égal à 2.

Avantageusement, le premier circuit et/ou le deuxième circuit de recyclage présente N entrées adjacentes d'une entrée d'un conduit d'amené de poudre.

Avantageusement, la première et/ou la deuxième chambre de distribution de poudre et/ou la chambre de gaz présente N sorties distribuées régulièrement sur la couronne.

Selon un mode de réalisation, combinant certaines caractéristiques décrites précédemment, la tête de distribution de poudres pour machine de fabrication additive, comprend :
- une ouverture traversante agencée pour permettre un passage d'un faisceau à haute énergie vers le point de fusion,
- un corps comprenant N conduits d'amené de poudre vers un point de fusion, lesdits conduits étant régulièrement distribués autour de l'ouverture traversante et convergeant vers le point de fusion,

La tête de distribution peut en outre comprendre un organe de distribution comprenant au moins une chambre de distribution de poudre présentant une entrée de poudre (la poudre transportée par un gaz et N sorties de poudre régulièrement distribuées autour de l'ouverture traversante de manière que chaque sortie de poudre puisse être connectée à un conduit d'amené de poudre respectif, le corps et l'organe de distribution étant configurés pour être mobiles l'un par rapport à l'autre, pour connecter ou déconnecter fluidiquement les sorties de poudre aux conduits d'amené de poudre selon la position relative dudit organe de distribution par rapport au corps, N étant supérieur ou égal à 2.

La pluralité de conduits d'amené de poudre et la pluralité des sorties de poudre permettent de distribuer et d'acheminer la poudre de façon homogène jusqu'au point de fusion et d'assurer une meilleure fusion de celle-ci. En effet, la chambre de distribution permet de repartir la poudre en amont des conduits d'amené via les sorties de poudre, ensuite la poudre est acheminée par les conduits d'amené respectifs et arrive donc au point de fusion de manière répartie autour du faisceau laser, ce qui permet d'atteindre très rapidement le point de fusion.

Cette configuration est avantageuse par rapport aux têtes de fabrication additive connues de l'état de la technique. En effet, dans les têtes de fabrication additives connues, il n'y pas de répartition en amont du conduit d'amené de poudre et la poudre arrive par une voie unique. Dans ce cas, il est nécessaire répartir la poudre dans le corps via évidement en forme de couronne puis sur un cône de focalisation, ou bien des buses concentriques. Cette répartition requiert un volume tampon suffisant et rallonge significativement le temps de réponse nécessaire pour l'obtention d'un flux homogène au niveau du point focal. Ce système oblige donc à respecter un temps de « pause » pour assurer un flux homogène de poudre, ce qui génère en conséquence une perte de poudre et une perte de temps.

Selon un mode de réalisation, l'organe de distribution peut comprendre :
- une première chambre de distribution de poudre présentant une première entrée de poudre et N premières sorties de poudre régulièrement distribuées autour de l'ouverture traversante,
- une deuxième chambre de distribution de poudre présentant une deuxième entrée de poudre et N deuxièmes sorties de poudre,
le corps et l'organe de distribution présentant au moins une position dans laquelle les premières sorties de poudre ou les deuxièmes sorties de poudre sont connectées fluidiquement aux conduits d'amené de poudre respectifs.

Selon encore un autre mode de réalisation, l'organe de distribution peut comprendre :
- une première chambre de distribution de poudre présentant une première entrée de poudre et N premières sorties de poudre régulièrement distribuées autour de l'ouverture traversante,
- une deuxième chambre de distribution de poudre présentant une deuxième entrée de poudre et N deuxièmes sorties de poudre,
l'organe de distribution comprenant en outre un ou plusieurs moyens de mixage de poudre reliant simultanément une première sortie de poudre et une deuxième sortie de poudre à un conduit d'amené de poudre commun.

Avantageusement, chaque paire formée d'une première sortie de poudre et d'une deuxième sortie de poudre peut être connectée à un conduit d'amené de poudre respectif par un moyen de mixage.

Selon un autre mode de réalisation :
- le corps comprend un nombre N de conduits d'amené de poudre régulièrement distribués autour de l'ouverture traversante et convergeant vers le point de fusion, le premier circuit et le deuxième circuit de recyclage présentent chacun N entrées chacune adjacente d'une entrée d'un conduit d'amené de poudre,
- les première et deuxième chambres de distribution de poudre et la chambre de gaz présentent chacune N sorties distribuées sur la couronne de manière que chacune des N sorties soit en regard d'une des N entrées du corps, N étant supérieur ou égal 2.

La multiplicité des conduits d'amené et des sorties de poudre permet de distribuer et d'acheminer la poudre de façon homogène jusqu'au point de fusion. En d'autres termes la poudre arrive au point de fusion de manière répartie autour du faisceau laser, ce qui permet une meilleure fusion de celle-ci.

La tête de distribution de poudre peut avantageusement être fabriquée par impression 3D. Dans ce cas, la tête de distribution de poudre peut comprendre un réseau de refroidissement intégré agissant à tous les niveaux du corps en parcourant différentes parties externes et internes du corps.

Contrairement aux systèmes connus dans lesquels la tête est généralement pourvue généralement d'une collerette de refroidissement, le système de refroidissement selon l'invention est un réseau de canaux de refroidissement qui parcourt entièrement le corps intérieurement et extérieurement. Ceci permet de former un bouclier thermique vers l'extérieur et d'assurer un refroidissement en interne des organes.

L'invention porte également sur une machine de fabrication additive par projection de poudres, comprenant une tête de distribution de poudres selon la description ci-dessus.

Les caractéristiques des modes de réalisations décrits ci-dessus peuvent être prises séparément ou ensemble ou selon différentes combinaisons.

### BREVE DESCRIPTION DES FIGURES

L'invention sera mieux comprise et d'autres particularités et avantages apparaîtront à la lecture de la description qui va suivre, la description faisant référence aux dessins annexés parmi lesquels :
[Fig 1] La figure 1représente est une vue schématique et partielle d'une installation d'impression 3D connue de l'état de la technique ;
[Fig 2] La figure 2 est une vue d'ensemble d'une tête d'impression selon l'invention ;
[Fig 3] [Fig 4] Les figures 3 et 4 représentent respectivement un organe de distribution et une partie principal d'un corps de la tête selon la figure 2;
[Fig 5] [Fig 6] Les figures 5 et 6 sont des coupes verticales de l'organe de distribution de la figure 3 et du corps principal de la figure 4 respectivement ;
[Fig 7] La figure 7 est une vue en coupe verticale de la tête d'impression selon la figure 2 ;
[Fig 8] La figure 8 est une vue éclatée d'un corps d'une tête d'impression selon l'invention ;
[Fig 9] [Fig 10] Les figures 9 et 10 sont deux variantes de la tête de la figure 2 ;
[Fig 11] La figure 11 est une vue en coupe d'une tête d'impression muni de moyens de mélange de deux poudres ;
[Fig 12] [Fig 13] La figure 12 et la figure 13 représentent une variante de la tête de la figure 11 permettant de faire un mélange de poudre à froid.

### DESCRIPTION DETAILLEE

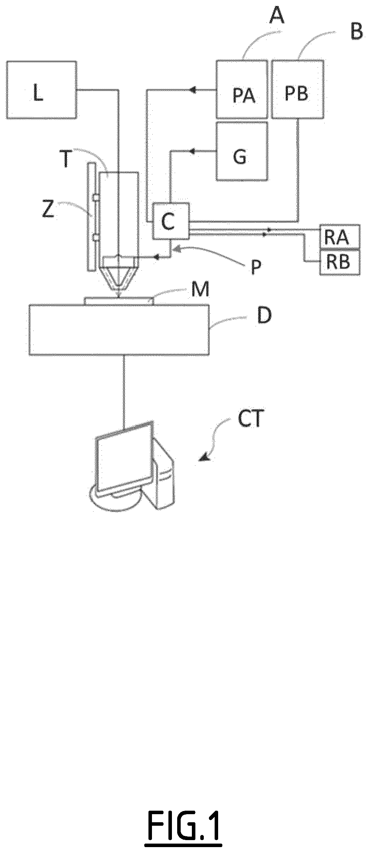

La figure 1, montre un exemple d'installation d'impression 3D par jet de poudres connue de l'état de la technique. L'installation comprend une tête d'impression T reliée à une première source A de poudre PA, et à une deuxième source B de poudre PB. Pour fabriquer un objet M, un conduit d'amené P achemine les poudres PA, PB jusqu'à un point de fusion F où un faisceau émis par une source laser L fond ces poudres séparément ou sous forme d'un mélange. Chaque poudre étant transportée par un gaz vecteur, un système de recyclage permet de récupérer les poudres PA, PB non utilisées dans des récupérateurs de poudre RA, RB respectifs.

Dans d'autres cas, non illustrés, l'installation peut être mono-matériau, ou au contraire comprendre plus de sources de poudres.

L'installation comprend également une source de gaz de purge G, ainsi qu'un système de distribution de poudre, aussi appelé système de commutation C. Ce système permet de brancher et débrancher les sources A, B de poudre PA, PB et la source de gaz G au conduit d'amené P ou aux récupérateurs de poudre RA, RB.

L'installation comprend enfin un système de déplacement Z pour déplacer la tête d'impression T et un système de déplacement D adapté pour déplacer l'objet M en particulier pendant la fabrication dans les deux directions du plan X, Y. Enfin, un système de contrôle CT pilote l'installation.

L'installation peut également comprendre un dispositif non-illustré de dosage des poudres PA et PB.

Les poudres, peuvent êtres des poudres métalliques telles que : les aciers au carbone et aciers inoxydables, ou tous les alliages métalliques, par exemple : les bases nickel, bases cobalt, alliages de titane, de cuivre ou d'aluminium, les céramiques, les composés intermétalliques, et aussi les polymères ou autres composites. Elles peuvent être utilisées séparément ou en couches distinctes pour la fabrication de pièces complètes, la réparation de pièces usées, ou le revêtement de surface de pièces métalliques.

Par ailleurs, dans l'exemple illustré le système de distribution de poudre est dans l'installation mais loin de la tête T. Cependant dans la plupart des imprimante 3D connues, le système de distribution de poudre est à l'extérieur de l'imprimante.

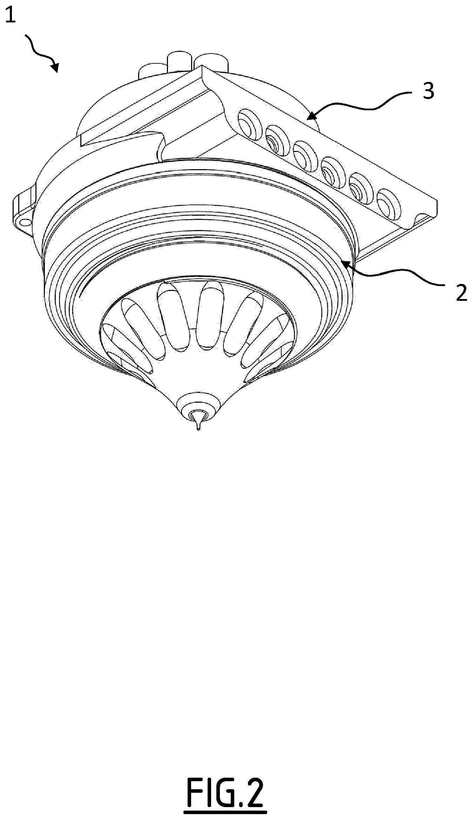

La figure 2 montre une vue d'ensemble d'une tête de distribution de poudre 1 selon un premier mode de réalisation de l'invention. La tête 1 comprend un corps 2 de forme globalement conique et un organe de distribution 3.

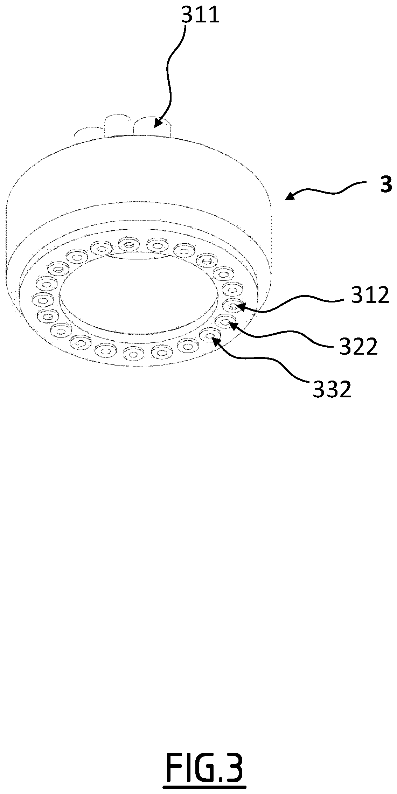

La figure 3 montre un premier exemple de réalisation d'un organe de distribution 3. Dans cet exemple de réalisation, l'organe de distribution 3 est sous forme d'une couronne.

Dans d'autres exemples de réalisation non illustrés, l'organe de distribution peut avoir une forme différente de celle de la couronne. Par exemple, l'organe de distribution peut avoir la forme d'un disque ou une forme rectangulaire.

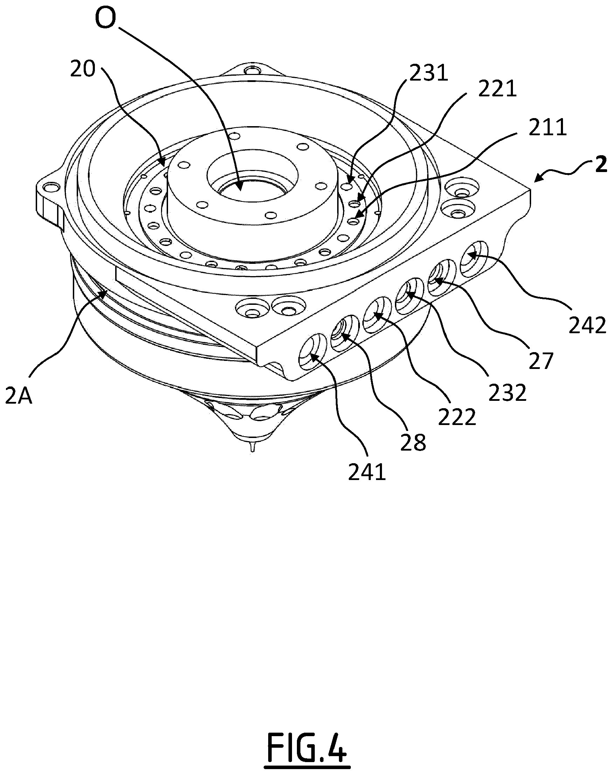

La figure 4 montre une vue partielle d'un corps 2. Plus précisément, la figure 4 montre une partie du corps que nous appelons corps principale 2A dans la suite de cette description.

Le corps principal 2A dans l'exemple illustré est de forme globalement cylindrique et présente un alésage 20 en forme de couronne destinée à accueillir la couronne de l'organe de distribution 3. Il présente également une ouverture traversante O à travers laquelle passe le faisceau Laser L comme décrit en référence à la figure 1.

La couronne de l'organe de distribution 3, lorsque la tête est assemblée telle qu'illustrée par la figure 2, est en contact avec le corps principal 2A. Plus précisément, la couronne est insérée dans l'alésage 20 du corps principal 2A. Les deux pièces 2A et 3 sont agencées de sorte que la couronne puisse tourner par rapport au corps principal ou inversement, si la couronne est fixe, c'est le corps principal qui tourne par rapport à la couronne.

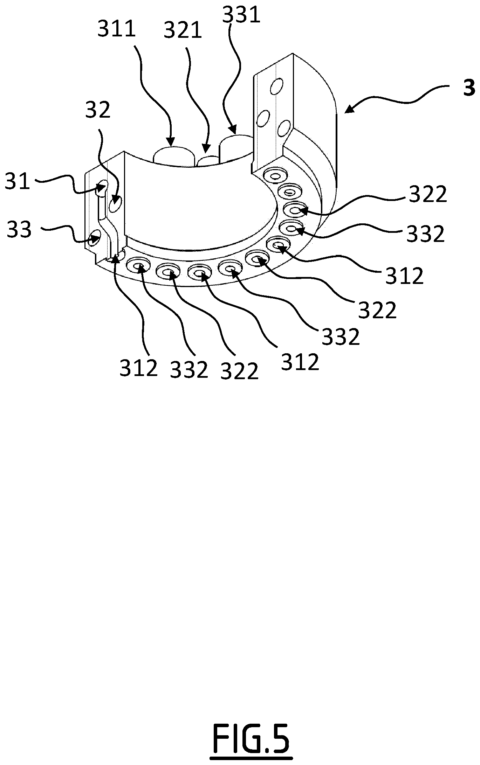

La figure 5 montre une vue en coupe verticale passant par l'axe de rotation de la couronne 3. Comme cela est montré, la couronne 3 présente une première chambre 31 annulaire destinée à la distribution d'une première poudre PA. La première chambre 31 présente une entrée de poudre 311 destinée à être reliée à une source de la première poudre PA. Elle présente également une pluralité de sorties de poudre 312 qui permettent de distribuer la poudre PA.

La couronne 3 présente également une deuxième chambre 32 destinée à la distribution d'une deuxième poudre PB. La deuxième chambre 32 présente une entrée de poudre 321 destinée à être reliée à une source de la deuxième poudre PB. Elle présente également une pluralité de sorties de poudre 322 qui permettent de distribuer la deuxième poudre PB.

La couronne 3 présente par ailleurs une troisième chambre 33 destinée à la distribution d'un gaz de purge G, tel que l'argon. La troisième chambre 33 présente une entrée de gaz 331 destinée à être reliée à une source du gaz de purge. Elle présente également une pluralité de sorties de gaz 332 qui permettent de distribuer le gaz de purge G.

Les sorties des trois chambres 31, 32, 33 sont agencées de façon régulière de sorte que chaque ensemble de trois sorties successives comprend nécessairement une première sortie 312 de la première chambre 31, une deuxième sortie 322 de la deuxième chambre 32 et une troisième sortie 332 de la troisième chambre 33.

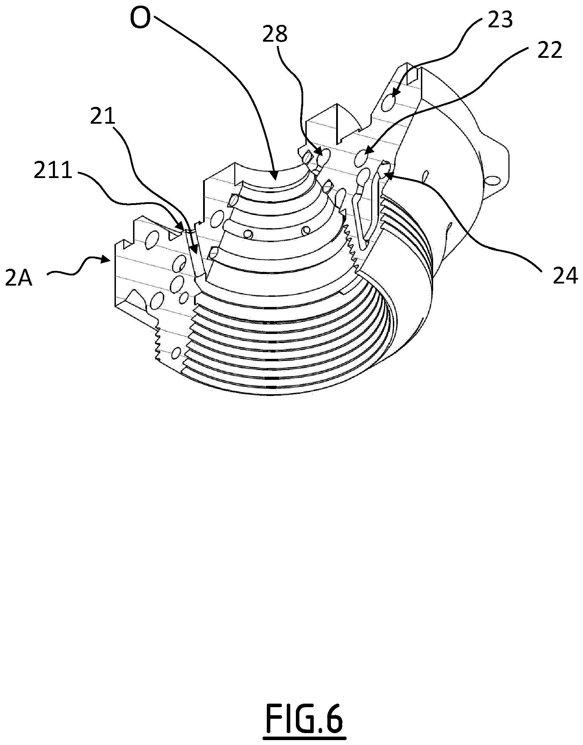

La figure 6 montre une vue en coupe verticale du corps principal 2A de la figure 4 et passant sensiblement par son axe central.

Le corps principal 2A présente une pluralité de conduits d'amené de poudre 21 qui acheminent la poudre jusqu'au point de fusion. Chaque conduit 21 présente une entrée 221 agencée pour être en regard d'une sortie de poudre 312, 322 ou d'une sortie de gaz 332. L'un de ces conduits 21 est visible sur la figure 6.

Le corps principal 2A comprend également deux circuits de recyclage de poudres 22, 23 configurés pour évacuer la poudre à destination de containers de recyclage RA, RB respectivement.

Le premier circuit de recyclage 22 présente une pluralité d'entrées 221 et une sortie 222 comme le montre la figure 4. Le deuxième circuit de recyclage 23 présente une pluralité d'entrées 231 et une sortie 232 comme le montre la figure 4. Les sorties 222 et 232 sont destinées à être reliées aux containers de recyclage RA, RB respectivement.

Avantageusement, le nombre de conduits d'amené de poudre 21, et le nombre d'entrées 221, 231 de chaque circuit de recyclage 22, 23, est égal au nombre de sorties de poudres 312, 322 et au nombre de sorte de gaz 332. Les entrées 211, 221, 231 des conduits d'amené 21 et des circuits de recyclage 22, 23 sont agencées de façon régulière de sorte que chaque ensemble de trois entrées successives comprend nécessairement une entrée 211 d'un conduit d'amené, une entrée 221 du premier circuit de recyclage et une entrée 231 du deuxième circuit de recyclage.

A titre d'exemple, lors de la rotation de la couronne 3 de distribution par rapport au corp 2 les configurations suivantes sont possibles.

Configuration 1 : injection de la première poudre PA.
- Chaque première sortie 312 de poudre PA est connectée fluidiquement à un conduit 21 d'amené de poudre. Dans ce cas la pièce est fabriquée à base de la première poudre PA ;
- Chaque deuxième sortie 322 de poudre est reliée à une entrée 231 du deuxième circuit de recyclage 23 pour recycler la deuxième poudre PB ; et
- Chaque sortie 332 de gaz est reliée à une entrée 221 du premier circuit de recyclage 22 pour purger ce circuit des résidus de la première poudre PA qui sont envoyés au conteneur RA.

Selon une utilisation alternative, lorsque la poudre PB n'est pas nécessaire, son alimentation peut être coupée.

Configuration 2 : injection de la deuxième poudre PB.
- Chaque deuxième sortie 322 de poudre PB est connectée fluidiquement à un conduit 21 d'amené de poudre. Dans ce cas la pièce est fabriquée à base de la deuxième poudre PB ;
- Chaque première sortie 312 de poudre PA est reliée à une entrée 221 du premier circuit de recyclage 22 pour recycler la première poudre PA ; et
- Chaque sortie 332 de gaz est reliée à une entrée 231 du deuxième circuit de recyclage 23 pour purger ce circuit des résidus de la deuxième poudre PB qui sont envoyés au conteneur RB.

Selon une utilisation alternative, lorsque la poudre PA n'est pas nécessaire, son alimentation peut être coupée et le gaz de recyclage peut être coupé aussitôt que le circuit est purgé.

Configuration 3 : injection de poudre coupée.
- Chaque sortie 332 de gaz est connectée fluidiquement à un conduit 21 d'amené de poudre. Dans ce cas l'injection de poudre au point de fusion est coupée ;
- Chaque première sortie 312 de poudre PA peut être reliée à une entrée 221 du premier circuit de recyclage 22 pour recycler la première poudre PA ; et
- Chaque deuxième sortie 322 de poudre peut être reliée à une entrée 231 du deuxième circuit de recyclage 23 pour recycler la deuxième poudre PB.

Comme cela est montré par les figures 4 et 6, le corps principal 2A peut également comprendre un circuit de refroidissement 24 configuré pour faire circuler un liquide de refroidissement entre une entrée de liquide 241 et une sortie de liquide 242.

De manière également optionnelle, le corps principal peut comprendre un conduit 27 d'alimentation en un flux de gaz de l'ouverture traversante O. Ce flux de gaz sert à empêcher des remontées de poudre dans l'ouverture traversante O.

Le corps principal peut aussi comprendre un conduit 28 d'alimentation en un flux de gaz au point de fusion. Ce flux de gaz sert à adapter la taille de la surface couverte par la poudre en particulier en évitant que celle-ci se focalise trop en un point. Ceci contribue à une meilleure fonte de la poudre par le faisceau laser.

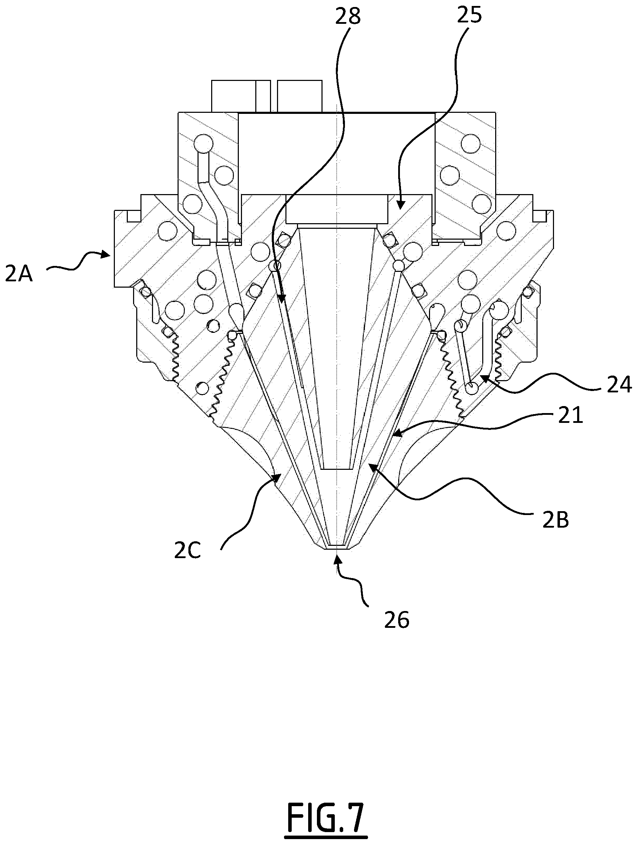

La figure 7 montre une coupe verticale de la tête d'impression 1 illustrée par les figures 2 à 6. Cette vue montre l'agencement du corps 2 avec l'organe de distribution 3, tel que décrit précédemment.

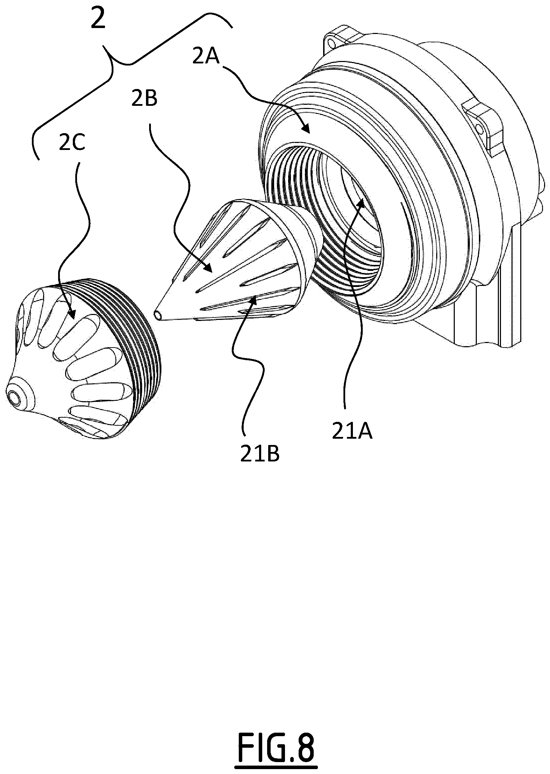

Dans l'exemple de réalisation de la figure 7, le corps 2, comme également illustré en figure 8, est de forme globalement conique et comprend trois parties :
- un corps principal 2A qui comprend une base 25 du cône et une partie supérieure 21A du ou des conduit(s) d'amené de poudre 21 ;
- un corps intermédiaire 2B de forme conique comprenant une partie inférieure 21B du ou des conduit(s) d'amené de poudre 21 ; et
- un corps extérieur 2C fixant le corps intermédiaire 2B au corps principal 2A et formant le sommet du cône 26.

Cette configuration avantageuse permet de simplifier la maintenance de la tête d'impression par comparaison avec les modèles existants.

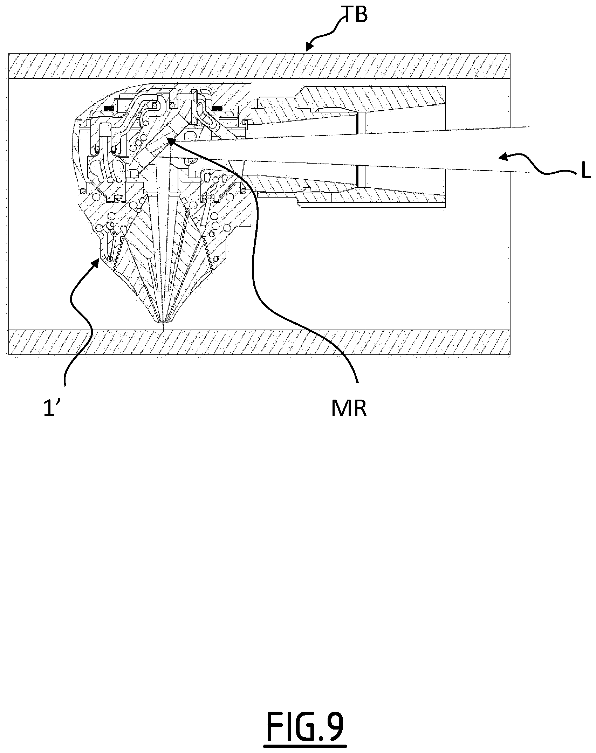

La figure 9 illustre une variante de la tête d'impression 3D selon l'invention. Cette tête 1' coudée à 90° est principalement destinée à l'ajout de matière, par exemple pour une réparation, à l'intérieur d'un tube TB en particulier des tubes ayant un diamètre intérieur supérieur ou égale à 100 millimètres.

La différence principale avec la tête d'impression 1 décrite précédemment réside dans sa forme coudée à 90° réduisant la hauteur des connectiques et autres composants connus de l'état de la technique au-dessus de l'organe de distribution 3. Ces connectiques sont agencées principalement sur un coté de l'organe de distribution 3. Ceci permet une insertion aisée à l'intérieur d'un tube.

Plus particulièrement, la tête 1' comprend un miroir MR permettant de renvoyer le faisceau laser L vers le point de fusion.

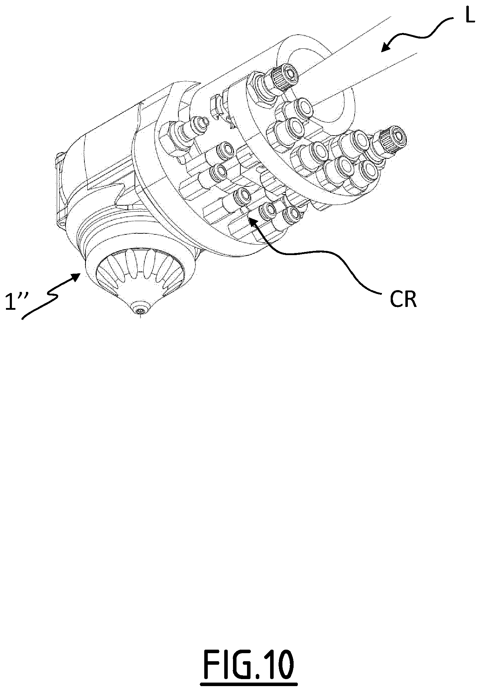

La figure 10 présente une variante de la tête 1' d'impression 3D de la figure 9. La tête 1" comprend en outre un système de connectiques rapide CR sur l'embase de la tête 1". Ce système de connectiques rapide CR permet d'avoir une maintenance et un remplacement rapides des têtes.

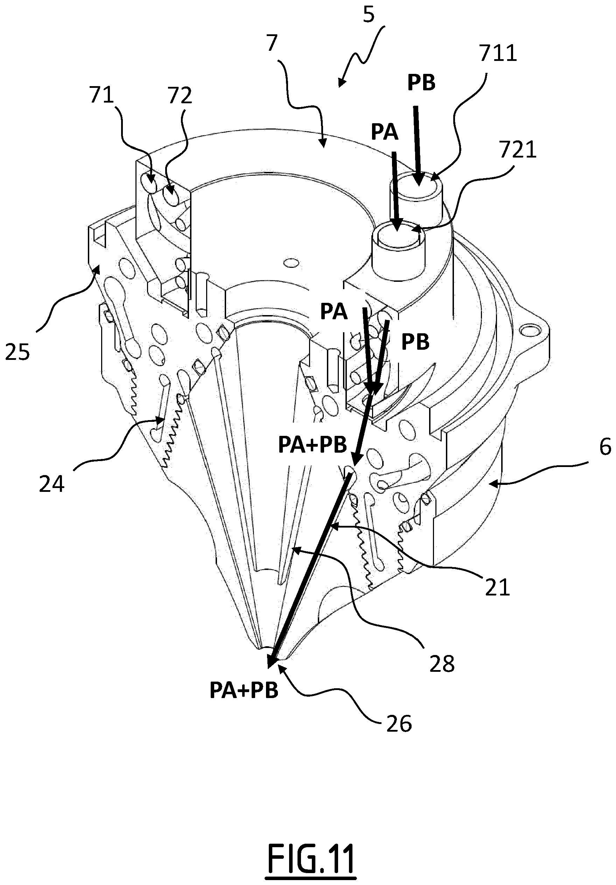

La figure 11 illustre un deuxième mode de réalisation dans lequel la tête 5 comprend un corps 6 sensiblement similaire au corps 2 de la tête 1 de la figure 2. La différence principale réside dans l'organe de distribution 7. Dans l'exemple montrée par la figure 11, la couronne de distribution 7 comprend deux chambres de distribution 71, 72 ayant des entrées de poudre 711, 721 respectivement. Elle comprend également un moyen de mixage configuré pour envoyer aux conduits d'amené de poudre 21 un mélange composé d'une proportion de la première poudre PA sortant de la première chambre 71 et d'une proportion de la deuxième poudre PB sortant de la deuxième chambre 72.

Le moyen de mixage peut par exemple comprendre des paires de canaux, l'un relié à la première chambre 71, l'autre à la deuxième chambre 72, convergents (convergence croisée) vers une entrée 211 d'un conduit d'amené de poudre 21.

Le dosage proportionnel de deux poudres PA, PB permet de fabriquer des pièces variables selon les concentrations des poudre PA et PB.

Dans ce cas, un dispositif non-illustré, de dosage des poudres PA et PB est prévu à l'extérieur de la tête 5.

Dans des modes de réalisation non illustrés, des mélanges proportionnés de 3 poudre ou plus sont utilisés.

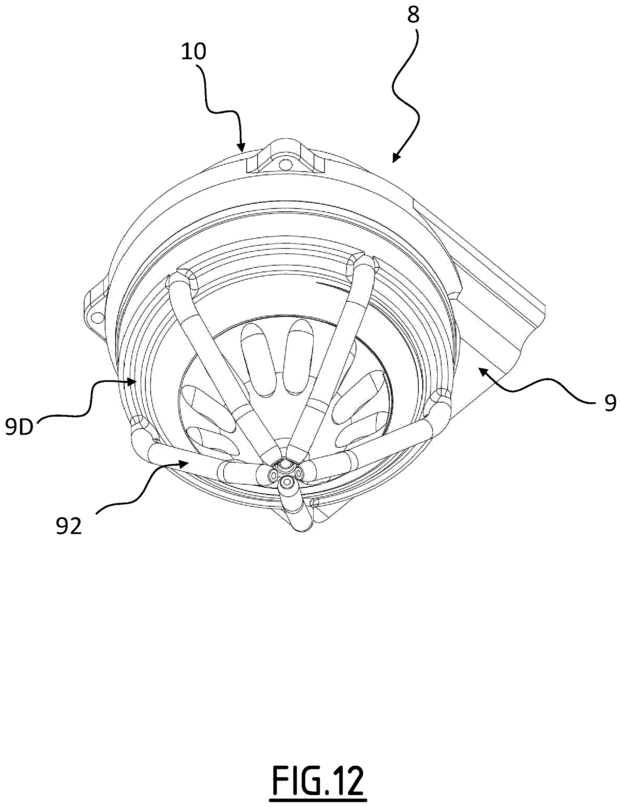

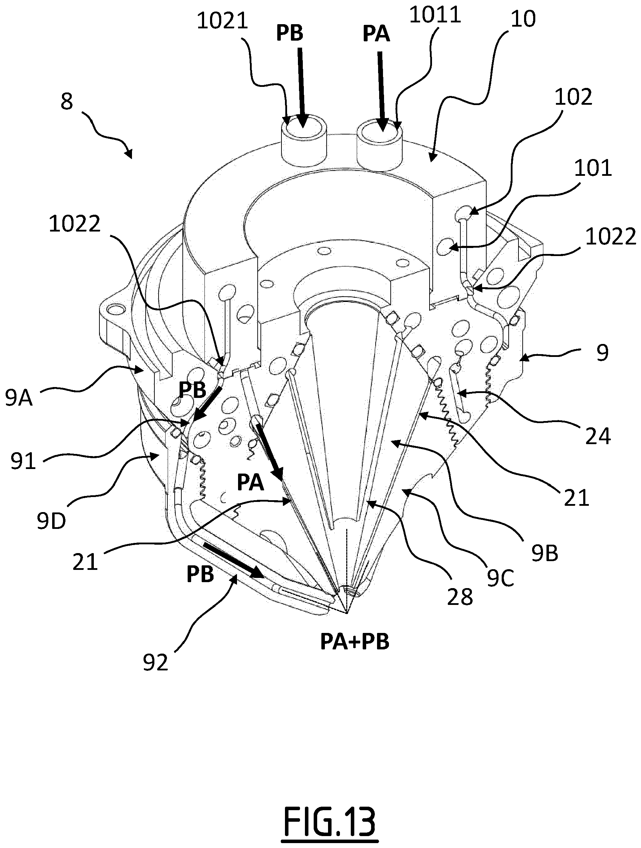

Les figures 12 et 13 représentent une variante de la tête de la figure 11 permettant de faire un mélange de poudres dans lequel l'une de celle-ci est moins chauffée du fait de son passage par les conduits extérieurs 92.

Alternativement, seuls les conduits extérieurs 92 sont alimentés en poudre.

La tête de distribution de poudres 8 comprend un corps 9 et un organe de distribution 10.

L'organe de distribution 10 est sensiblement similaire à l'organe de distribution 7 de la tête 5 décrite précédemment. L'organe de distribution 10 diffère par le fait qu'il ne comprend pas de moyen de mixage permettant d'envoyer un mélange de poudre au conduit d'amené de poudre 21.

L'organe de distribution 10 comprend une première chambre de distribution de poudre 101 avec une entrée de poudre 1011 et une ou plusieurs sorties de poudre (non visibles sur la figure 13), chacune est destinée à injecter la première poudre PA à un conduit d'amené de poudre 21. Il comprend aussi une deuxième chambre de distribution de poudre 102 avec une entrée 1021 de poudre PB et une ou plusieurs sorties de poudre 1022.

Le corps 9 est similaire au corps 6 décrit en référence à la figure 11. II comprend un corps principal 9A, un corps intermédiaire 9B et un corps externe 9C. Le corps principal 9A comprend en outre des conduit internes 91 permettant de relier les sorties 1022 à la périphérie du corps principal 9A.

Le corps 9 comprend en outre un corps additionnel 9D, par exemple, sous forme d'une couronne qui se visse autour du corps principal. Le corps additionnel 9D comprend des conduits externes 92 d'amené de poudre agencé pour communiquer fluidiquement avec les sorties de poudre 1022 via les conduits internes 91. De cette manière, la deuxième poudre PB est acheminée au point de fusion via les conduits externes 92 et mélangée à froid au bain de fusion.

## Revendications

1. Tête de distribution de poudres (1 ; 5 ; 8) pour machine de fabrication additive, ladite tête (1 ; 5 ; 8) comprenant :
- une ouverture traversante (O) agencée pour permettre un passage d'un faisceau à haute énergie (L) vers le point de fusion,
- un corps (2 ; 6 ; 9) comprenant N conduits d'amené de poudre (21 ; 92) vers un point de fusion, lesdits conduits étant régulièrement distribués autour de l'ouverture traversante (O) et convergeant vers le point de fusion,
la tête de distribution (1 ; 5 ; 8) comprenant en outre un organe de distribution (3 ; 7 ; 10) comprenant au moins une chambre (31, 32 ; 71, 72 ; 101, 102) de distribution de poudre présentant une entrée (311, 321 ; 711, 721 ;1011, 1021) de poudre transportée par un gaz et N sorties de poudre (312 ; 1022) régulièrement distribuées autour de l'ouverture traversante (O) de manière que chaque sortie de poudre puisse se connecter à un conduit d'amené de poudre (21 ; 92) respectif, le corps (2 ; 6 ; 9) et l'organe de distribution (3 ; 7 ; 10) étant configurés pour être mobiles l'un par rapport à l'autre, pour connecter ou déconnecter fluidiquement les sorties (312, 322 ; 1022) de poudre aux conduits d'amené de poudre (21 ; 92) selon la position relative dudit organe de distribution (3 ; 7 ; 10) par rapport au corps (2 ; 6 ; 9), N étant supérieur ou égal à 2.

2. Tête de distribution de poudres selon la revendication 1 dans laquelle l'organe de distribution comprend :
- une première chambre (31 ; 71 ; 101) de distribution de poudre présentant une première entrée (311 ; 711 ; 1011) de poudre et N premières sorties de poudre (312) régulièrement distribuées autour de l'ouverture traversante (O),
- une deuxième chambre de distribution de poudre (32 ; 72, 102) présentant une deuxième entrée de poudre (321 ; 721 ; 1021) et N deuxièmes sorties de poudre (322 ; 1022),
le corps (2 ; 9) et l'organe de distribution (3 ; 10) présentant au moins une position dans laquelle les premières sorties de poudre (312) ou les deuxièmes sorties de poudre (322 ; 1022) sont connectées fluidiquement au conduits d'amené de poudre (21 ; 92) respectifs.

3. Tête de distribution de poudres (5) selon la revendication 1 dans laquelle l'organe de distribution comprend :
- une première chambre (71) de distribution de poudre présentant une première entrée (711) de poudre et N premières sorties de poudre régulièrement distribuées autour de l'ouverture traversante (O),
- une deuxième chambre (72) de distribution de poudre présentant une deuxième entrée de poudre (721) et N deuxièmes sorties de poudre,
l'organe de distribution (7) comprenant en outre un ou plusieurs moyens de mixage de poudre reliant simultanément une première sortie de poudre et une deuxième sortie de poudre à un conduit d'amené de poudre (21) commun.

4. Tête de distribution de poudres selon la revendication 2 dans laquelle le corps (2 ; 9) comprend en outre un circuit de recyclage de poudre (22, 23) configuré pour évacuer la poudre à destination d'un container de recyclage (RA, RB), l'organe de distribution (3 ; 10) étant configuré pour connecter fluidiquement la première sortie de poudre (312) ou la deuxième sortie de poudre (322) au circuit de recyclage (22, 23) lorsque celle-ci est déconnectée du conduit d'amené (21).

5. Tête de distribution de poudres selon la revendication précédente dans laquelle le corps comprend deux circuits de recyclage (22, 23) configurés chacun pour évacuer une poudre (PA, PB) à destination d'un container de recyclage respectif (RA, RB), les première(s) sorties (311) et deuxième(s) sorties (322) étant configurées chacune pour être connectées à son circuit de recyclage respectif (22, 23) lorsqu'elles sont déconnectées du conduit d'amené de poudre (21).

6. Tête de distribution de poudres selon la revendication 4 ou la revendication 5, dans laquelle l'organe de distribution comprend en outre une chambre (33) de distribution d'un gaz de purge présentant une entrée de gaz (331) et N sorties de gaz (332), le corps (2) et l'organe de distribution (3) présentant au moins une position dans laquelle les sorties (332) de gaz sont connectées fluidiquement aux conduits d'amené de poudre (21) respectifs au premier circuit de recyclage (22) ou au deuxième circuit de recyclage (23).

7. Tête de distribution de poudres (8) selon l'une des revendications 2 ou 4 à 6, dans laquelle le corps (9) comprend N conduits externes (92) d'amené de poudre agencé pour communiquer fluidiquement avec les sorties de poudre (1022) et configuré pour amener la première poudre (PA) ou la deuxième poudre (PB) vers le point de fusion.

8. Tête de distribution de poudres (1) selon la revendication 6 dans laquelle,
- le corps présente une forme conique, l'ouverture traversante étant agencée entre la base et le sommet du cône, et dans laquelle
- l'organe de distribution a la forme d'une couronne agencée pour coopérer avec la base du cône et est mobile en rotation par rapport à celle-ci.

9. Tête de distribution de poudres (1) selon la revendication 8 dans laquelle,
- le corps comprend un nombre N de conduits d'amené de poudre (21) régulièrement distribués autour de l'ouverture traversante (O) et convergeant vers le point de fusion, le premier circuit (22) et le deuxième circuits (23) de recyclage présentent chacun N entrées (221 ; 231) chacune adjacente d'une entrée (211) d'un conduit d'amené de poudre (21),
- les première et deuxième chambres de distribution de poudre (31, 32) et la chambre de gaz (33) présentent chacune N sorties (313 ; 322 ; 332) distribuées sur la couronne de manière que chacune des N sorties (313 ; 322 ; 332) soit en regard d'une des N entrées (211 ; 221 ; 231) du corps, N étant supérieur ou égal 2.

10. Tête de distribution de poudres (1 ; 5 ; 8) selon l'une des revendications précédentes comprenant en outre un circuit de refroidissement (24) configuré pour faire circuler un liquide de refroidissement entre une entrée de liquide (241) et une sortie de liquide (242).

11. Tête de distribution de poudres (1 ; 5 ; 8) selon la revendication précédente, ladite tête étant obtenue par fabrication additive et le circuit de refroidissement est sous forme d'un réseau intégré parcourant différentes parties externes et internes du corps (2).

12. Machine de fabrication additive par projection de poudres, comprenant une tête de distribution de poudres (1 ; 5 ; 8) selon l'une quelconque des revendications précédentes.

## Patentansprüche

1. Pulverabgabekopf (1; 5; 8) für eine additive Fertigungsmaschine, wobei der Kopf (1; 5; 8) Folgendes umfasst:
- eine Durchgangsöffnung (O), die dafür angeordnet ist, einen Durchtritt eines Hochenergiebündels (L) zum Schmelzpunkt zu ermöglichen,
- einen Körper (2; 6; 9), der N Pulverzuleitungen (21; 92) zu einem Schmelzpunkt umfasst, wobei die Leitungen regelmäßig um die Durchgangsöffnung (O) verteilt sind und zum Schmelzpunkt hin zusammenlaufen,
wobei der Abgabekopf (1; 5; 8) ferner ein Abgabeorgan (3; 7; 10) umfasst, das wenigstens eine Pulverabgabekammer (31, 32; 71, 72; 101, 102) umfasst, die einen Einlass (311, 321; 711, 721; 1011, 1021) für Pulver, das von einem Gas transportiert wird, und N Pulverauslässe (312; 1022) aufweist, die regelmäßig um die Durchgangsöffnung (O) verteilt sind, so dass jeder Pulverauslass mit einer jeweiligen Pulverzuleitung (21; 92) verbunden werden kann, wobei der Körper (2; 6; 9) und das Abgabeorgan (3; 7; 10) dazu ausgebildet sind, zueinander beweglich zu sein, um die Pulverauslässe (312, 322; 1022) mit den Pulverzuleitungen (21; 92) zu verbinden oder davon zu trennen, je nach der relativen Position des Abgabeorgans (3; 7; 10) bezogen auf den Körper (2; 6; 9), wobei N größer als oder gleich 2 ist.périeur ou égal à 2.

2. Pulverabgabekopf nach Anspruch 1, wobei das Abgabeorgan Folgendes umfasst:
- eine erste Pulverabgabekammer (31; 71; 101), die einen ersten Pulvereinlass (311; 711; 1011) und N erste Pulverauslässe (312) aufweist, die regelmäßig um die Durchgangsöffnung (O) verteilt sind,
- eine zweite Pulverabgabekammer (32; 72, 102), die einen zweiten Pulvereinlass (321; 721; 1021) und N zweite Pulverauslässe (322; 1022) aufweist,
wobei der Körper (2; 9) und das Abgabeorgan (3; 10) wenigstens eine Position aufweisen, in der die ersten Pulverauslässe (312) oder die zweiten Pulverauslässe (322; 1022) fluidisch mit den jeweiligen Pulverzuleitungen (21; 92) verbunden sind.

3. Pulverabgabekopf (5) nach Anspruch 1, wobei das Abgabeorgan Folgendes umfasst:
- eine erste Pulverabgabekammer (71), die einen ersten Pulvereinlass (711) und N erste Pulverauslässe aufweist, die regelmäßig um die Durchgangsöffnung (O) verteilt sind,
- eine zweite Pulverabgabekammer (72), die einen zweiten Pulvereinlass (721) und N zweite Pulverauslässe aufweist,
wobei das Abgabeorgan (7) ferner ein oder mehrere Pulvermischmittel umfasst, die gleichzeitig einen ersten Pulverauslass und einen zweiten Pulverauslass mit einer gemeinsamen Pulverzuleitung (21) verbinden.

4. Pulverabgabekopf nach Anspruch 2, wobei der Körper (2; 9) ferner einen Pulver-Wiederverwertungskreis (22, 23) umfasst, der dazu ausgebildet ist, das Pulver in einen Wiederverwertungsbehälter (RA, RB) abzuleiten, wobei das Abgabeorgan (3; 10) dazu ausgebildet ist, den ersten Pulverauslass (312) oder den zweiten Pulverauslass (322), wenn dieser von der Zuleitung (21) getrennt ist, fluidisch mit dem Pulver-Wiederverwertungskreis (22, 23) zu verbinden.

5. Pulverabgabekopf nach dem vorhergehenden Anspruch, wobei der Körper zwei Wiederverwertungskreise (22, 23) umfasst, die jeweils dazu ausgebildet sind, ein Pulver (PA, PB) in einen jeweiligen Wiederverwertungsbehälter (RA, RB) abzuleiten, wobei der erste bzw. die ersten Auslässe (311) und der zweite bzw. die zweiten Auslässe (322) jeweils dazu ausgebildet sind, mit ihrem jeweiligen Wiederverwertungskreis (22, 23) verbunden zu sein, wenn sie von der Pulverzuleitung (21) getrennt sind.

6. Pulverabgabekopf nach Anspruch 4 oder 5, wobei das Abgabeorgan ferner eine Kammer (33) zur Abgabe eines Spülgases umfasst, die einen Gaseinlass (331) und N Gasauslässe (332) aufweist, wobei der Körper (2) und das Abgabeorgan (3) wenigstens eine Position aufweisen, in der die Gasauslässe (332) fluidisch mit den jeweiligen Pulverzuleitungen (21), dem ersten Wiederverwertungskreis (22) oder dem zweiten Wiederverwertungskreis (23) verbunden sind.

7. Pulverabgabekopf (8) nach einem der Ansprüche 2 oder 4 bis 6, wobei der Körper (9) N äußere Pulverzuleitungen (92) umfasst, die dafür angeordnet ist, mit den Pulverauslässen (1022) in Fluidverbindung zu stehen und dazu ausgebildet ist, das erste Pulver (PA) oder das zweite Pulver (PB) zum Schmelzpunkt zu befördern.

8. Pulverabgabekopf (1) nach Anspruch 6, wobei
- der Körper eine Kegelform aufweist, wobei die Durchgangsöffnung zwischen dem Fuß und der Spitze des Kegels angeordnet ist, und wobei
- das Abgabeorgan die Form einer Krone aufweist, die dafür angeordnet ist, mit dem Fuß des Kegels zusammenzuwirken und bezogen auf diesen drehbeweglich ist.

9. Pulverabgabekopf (1) nach Anspruch 8, wobei
- der Körper eine Anzahl N von Pulverzuleitungen (21) umfasst, die regelmäßig um die Durchgangsöffnung (O) verteilt sind und zum Schmelzpunkt hin zusammenlaufen, wobei der erste Wiederverwertungskreis (22) und der zweite Wiederverwertungskreis (23) jeweils N Einlässe (221; 231) aufweisen, die jeweils an einen Einlass (211) einer Pulverzuleitung (21) angrenzen,
- die erste und zweite Pulverabgabekammer (31, 32) und die Gaskammer (33) jeweils N Auslässe (313; 322; 332) aufweisen, die so auf der Krone verteilt sind, dass sich jeder der N Auslässe (313; 322; 332) gegenüber einem der N Einlässe (211; 221; 231) des Körpers befindet, wobei N größer als oder gleich 2 ist.

10. Pulverabgabekopf (1; 5; 8) nach einem der vorhergehenden Ansprüche, ferner umfassend einen Kühlkreis (24), der dazu ausgebildet ist, eine Kühlflüssigkeit zwischen einem Flüssigkeitseinlass (241) und einem Flüssigkeitsauslass (242) zirkulieren zu lassen.

11. Pulverabgabekopf (1; 5; 8) nach dem vorhergehenden Anspruch, wobei der Kopf durch additive Fertigung hergestellt ist und der Kühlkreis in Form eines integrierten Netzes vorliegt, das verschiedene äußere und innere Abschnitte des Körpers (2) durchläuft.

12. Maschine zur additiven Fertigung durch Sprühen von Pulver, umfassend einen Pulverabgabekopf (1; 5; 8) nach einem der vorhergehenden Ansprüche.

## Claims

1. Powder dispensing head (1; 5; 8) for an additive manufacturing machine, said head (1; 5; 8) comprising:
- a through-opening (O) designed to allow the passage of a high-energy beam (L) towards the melting point,
- a body (2; 6; 9) comprising N powder conveying ducts (21; 92) leading towards a melting point, said ducts being uniformly distributed about the through-opening (O) and converging towards the melting point,
the dispensing head (1; 5; 8) further comprising a dispensing member (3; 7; 10) comprising at least one powder dispensing chamber (31, 32; 71, 72; 101, 102) having an inlet (311, 321; 711, 721; 1011, 1021) for powder transported by a gas, and N powder outlets (312; 1022) uniformly distributed about the through-opening (O) in such a way that each powder outlet can be connected to a respective powder conveying duct (21; 92), the body (2; 6; 9) and the dispensing member (3; 7; 10) being configured to be able to move relative to one another so as to fluidically connect or disconnect the powder outlet (312, 322; 1022) with respect to the powder conveying ducts (21; 92) according to the relative position of said dispensing member (3; 7; 10) with respect to the body (2; 6; 9), N being greater than or equal to 2.

2. Powder dispensing head according to Claim 1, wherein the dispensing member comprises:
- a first powder dispensing chamber (31; 71; 101) having a first powder inlet (311; 711; 1011) and N first powder outlets (312) uniformly distributed about the through-opening (O),
- a second powder dispensing chamber (32; 72, 102) having a second powder inlet (321; 721; 1021) and N second powder outlets (322; 1022),
the body (2; 9) and the dispensing member (3; 10) having at least one position in which the first powder outlets (312) or the second powder outlets (322; 1022) are fluidically connected to the respective powder conveying ducts (21; 92).

3. Powder dispensing head (5) according to Claim 1, wherein the dispensing member comprises:
- a first powder dispensing chamber (71) having a first powder inlet (711) and N first powder outlets uniformly distributed about the through-opening (O),
- a second powder dispensing chamber (72) having a second powder inlet (721) and N second powder outlets,
the dispensing member (7) further comprising one or more powder mixing means simultaneously connecting a first powder outlet and a second powder outlet to a common powder conveying duct (21).

4. Powder dispensing head according to Claim 2, wherein the body (2; 9) further comprises a powder recycling circuit (22, 23) configured to remove the powder to a recycling container (RA, RB), the dispensing member (3; 10) being configured to fluidically connect the first powder outlet (312) or the second powder outlet (322) to the recycling circuit (22, 23) when this outlet is disconnected from the conveying duct (21).

5. Powder dispensing head according to Claim 4, wherein the body comprises two recycling circuits (22, 23) each one configured to remove a powder (PA, PB) to a respective recycling container (RA, RB), the first outlet(s) (311) and second outlet(s) (322) each being configured to be connected to their respective recycling circuit (22, 23) when they are disconnected from the powder conveying duct (21).

6. Powder dispensing head according to Claim 4 or Claim 5, wherein the dispensing member further comprises a purge gas dispensing chamber (33) having a gas inlet (331) and N gas outlets (332), the body (2) and the dispensing member (3) having at least one position in which the gas outlets (332) are fluidically connected to the respective powder conveying ducts (21), to the first recycling circuit (22), or to the second recycling circuit (23).

7. Powder dispensing head (8) according to one of Claims 2 or 4 to 6, wherein the body (9) comprises N external powder conveying ducts (92) designed to communicate fluidically with the powder outlets (1022) and configured to convey the first powder (PA) or the second powder (PB) towards the melting point.

8. Powder dispensing head (1) according to Claim 6, wherein
- the body has a conical shape, the through-opening being arranged between the base and the vertex of the cone, and wherein
- the dispensing member has the shape of a ring designed to collaborate with the base of the cone and is able to rotate with respect to said base.

9. Powder dispensing head (1) according to Claim 8, wherein
- the body comprises a number N of powder conveying ducts (21) which are uniformly distributed about the through-opening (O) and converge towards the melting point, the first recycling circuit (22) and the second recycling circuit (23) each having N inlets (221; 231) each one adjacent to an inlet (211) of a powder conveying duct (21),
- the first and second powder dispensing chambers (31, 32) and the gas chamber (33) each have N outlets (313; 322; 332) distributed on the ring so that each of the N outlets (313; 322; 332) faces one of the N inlets (211; 221; 231) of the body, N being greater than or equal to 2.

10. Powder dispensing head (1; 5; 8) according to one of the preceding claims, further comprising a cooling circuit (24) configured to circulate a liquid coolant between a liquid inlet (241) and a liquid outlet (242).

11. Powder dispensing head (1; 5; 8) according to the preceding claim, said head being obtained by additive manufacturing and the cooling circuit being in the form of an inbuilt network passing through various external and internal parts of the body (2).

12. Powder jetting additive manufacturing machine comprising a powder dispensing head (1; 5; 8) according to any one of the preceding claims.
